# DEMANDE DE BREVET EUROPEEN

(11) **EP 0 712 258 A2**
(43) Date de publication de la demande: **15.05.1996**
(21) Numéro de dépôt: 95402493.1
(22) Date de dépôt: 07.11.1995
(51) Int. Cl.: H04Q 7/34

(54) **Dispositif de test de terminaux de radiocommunications mobiles**

(30) Priorité: 09.11.1994 FR 9413465
(71) Demandeur: ALCATEL MOBILE PHONES, F-75015 Paris (FR)
(72) Inventeur: Torregrossa, Philippe, F-53360 Origne (FR)
(74) Mandataire: El Manouni, Josiane

(57) **Abrégé**

Dispositif de test de terminaux de télécommunications, pour système de télécommunications, notamment de radiocommunications mobiles, du type à accès multiple, selon une structure de multiplex déterminée, caractérisé en ce qu'il comporte des moyens pour assurer une transmission d'informations dites de test entre ce dispositif de test (T) et une pluralité de terminaux à tester (TO, T1 ... Tn), par multiplexage, suivant ladite structure de multiplex temporel.

## Description

La présente invention concerne le test de terminaux de télécommunications, notamment de radiocommunications mobiles.

La présente invention concerne plus particulièrement un tel test permettant de contrôler, en fabrication, la qualité de transmission des chaînes émission et réception de ces terminaux.

Le principe d'un tel test est de générer des informations dites de test qui sont émises vers le terminal à tester, reçues et traitées par la chaîne de réception de ce terminal, puis réémises par la chaîne émission de ce même terminal, vers l'appareil de test qui effectue alors diverses mesures (telles que mesure de niveau de puissance, de taux d'erreurs...etc) destinées à comparer les informations qu'il reçoit avec les informations qu'il a émises, afin d'évaluer ladite qualité de transmission. Le type de mesures à effectuer fait en général l'objet de normalisation ; ainsi, pour le cas de terminaux mobiles du type GSM (Groupe Special Mobile) par exemple, ces mesures sont définies dans la recommandation GSM 11.10.

Divers modèles d'appareils de test, notamment pour terminaux mobiles du type GSM, existent actuellement.

La demanderesse s'est intéressée à ce qu'elle considère comme un inconvénient de ces appareils de test, qui est qu'un même appareil de test ne permet de tester qu'un seul terminal à la fois.

La présente invention a ainsi pour but de rendre cette opération de test plus économique, en permettant de tester plusieurs terminaux simultanément avec un même dispositif de test, et ce, par ailleurs, sans accroissement notable de complexité de ce dispositif de test.

La présente invention est applicable à des terminaux destinés à des systèmes de télécommunications du type à accès multiple. Par système de télécommunications à accès multiple on entend un système de télécommunications à partage de ressources de transmission permettant plusieurs communications simultanées sur des canaux distincts, à l'aide d'un multiplex qui peut être soit fréquentiel (Accès Multiple à répartition Fréquentielle, ou AMRF), soit temporel (Accès Multiple à Répartition Temporelle, ou ARMT) soit à répartition par codes (Accès Multiple à Répartition par Codes, ou AMRC). La présente invention est ainsi notamment applicable au cas de systèmes de télécommunications du type à accès multiple par répartition temporelle, ce qui est notamment le cas du système GSM précité.

La présente invention a ainsi essentiellement pour objet un dispositif de test de terminaux pour système de télécommunications, notamment de radiocommunications mobiles, du type à accès multiple, selon une structure de multiplex déterminée, ce dispositif étant essentiellement caractérisé en ce qu'il comporte des moyens pour assurer une transmission d'informations dites de test entre ce dispositif et une pluralité de terminaux à tester, par multiplexage, suivant ladite structure de multiplex.

La présente invention a également pour objet un terminal de télécommunications apte à être testé au moyen d'un tel dispositif.

D'autres objets et caractéristiques de la présente invention apparaîtront à la lecture de la description suivante d'exemples de réalisation, faite, à titre d'exemple pour le cas d'accès multiple à répartition temporelle, en relation avec les dessins ci-annexés dans lesquels :
- la figure 1 illustre schématiquement une configuration de test obtenue suivant la présente invention,
- la figure 2 illustre un exemple, suivant l'invention, de multiplexage temporel d'informations de test relatives à une pluralité de terminaux à tester ;
- la figure 3 illustre un exemple de réalisation d'un dispositif de test suivant l'invention ;
- la figure 4 illustre un exemple de réalisation d'un terminal suivant l'invention, apte à être testé au moyen d'un dispositif de test suivant l'invention.

La présente invention est ainsi notamment applicable au cas de terminaux destinés à des systèmes de télécommunications du type à accès multiple par répartition temporelle, suivant une structure de multiplex temporel déterminée.

On rappelle qu'une telle structure de multiplex temporel est constituée de trames successives comportant chacune différents intervalles de temps (huit dans le cas du système GSM par exemple) destinés à être alloués respectivement à différentes communications à établir simultanément par ce système.

Suivant l'invention, on utilise une telle structure de multiplex temporel pour tester simultanément plusieurs terminaux (c'est-à-dire au moins deux terminaux) au moyen d'un même dispositif de test.

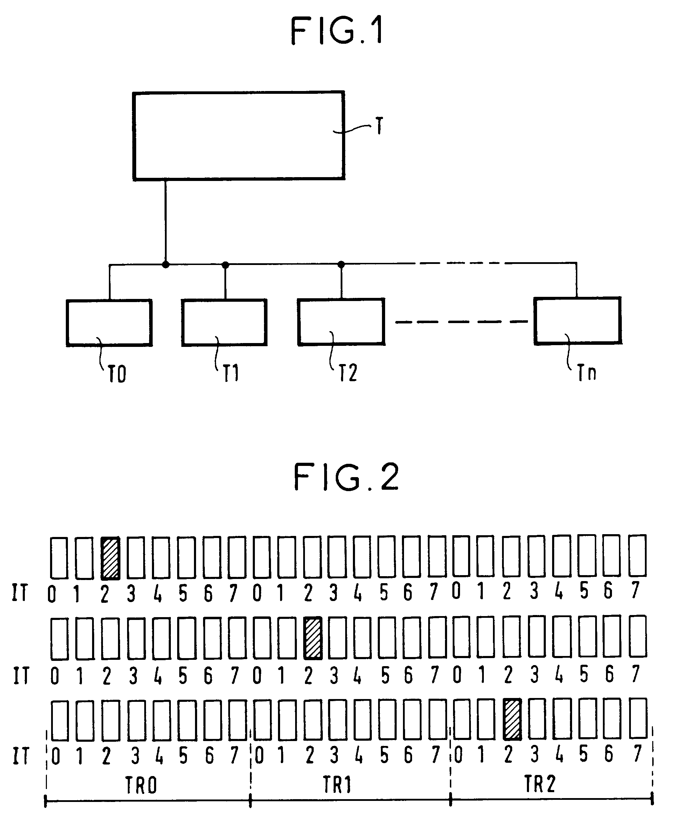

Une telle configuration de test est illustrée sur la figure 1, où l'on a noté T le dispositif de test, et TO, T1 ... Tn les n terminaux à tester simultanément au moyen de ce dispositif de test. A titre d'exemple, ce dispositif de test et ces terminaux sont reliés par une liaison filaire, qui, dans le cas de terminaux de radiocommunications par exemple, est une liaison RF.

Suivant l'exemple illustré sur la figure 2, le multiplexage d'informations de test relatives à une pluralité de terminaux à tester est obtenu en allouant respectivement aux différents terminaux à tester différentes trames de ladite structure de multiplex temporel, les intervalles de temps alloués, dans ces différentes trames, aux différents terminaux à tester, pouvant être indifféremment identiques ou différents.

Sur le diagramme de la figure 2 on a ainsi illustré, à titre d'exemple, trois trames successives, repérées TRO à TR1, comportant chacune à titre d'exemple huit intervalles de temps, repérés ITO à IT7, et, pour chacun de n terminaux à tester (avec à titre d'exemple n=3) correspondant à l'une des lignes de ce diagramme, on a indiqué, par des hachures, celui des intervalles de temps qui est alloué à ce terminal.

Dans l'exemple considéré, l'intervalle de temps IT2 de la première trame TR0 est alloué au terminal à tester T0, l'intervalle de temps IT2 de la deuxième trame TR1 est alloué au terminal à tester T1, et l'intervalle de temps IT2 de la troisième trame TR2 est alloué au terminal à tester T2.

Suivant un autre exemple, non illustré spécifiquement, le multiplexage d'informations de test relatives à n terminaux à tester consisterait à allouer différents intervalles de temps d'une même trame aux différents terminaux à tester. L'exemple illustré sur la figure 2 permet cependant, par rapport à ce dernier exemple, de limiter la puissance de traitement nécessaire dans le dispositif de test, et donc de limiter l'accroissement de complexité de ce dispositif de test par rapport à sa structure actuelle permettant de tester une seul terminal à la fois.

Au lieu d'allouer à différents terminaux à tester des trames différentes, il serait aussi possible d'allouer à ces terminaux différents groupes de trames consécutives. Un cas particulier de tel groupe de trames consécutives consiste en une multitrame, notamment, dans le cas du système GSM, en une multitrame dite "multitrame à 26".

On rappelle que, alors qu'une trame conduit à la définition de canaux de transmission physiques, ou intervalles de temps, multiplexés dans le temps, une multitrame conduit à la définition de canaux de transmission dits logiques, définis par le type d'informations qu'ils transportent (à savoir des informations de trafic, correspondant aux informations proprement dites à transmettre au cours d'une communication, ou des informations de signalisation, permettant l'établissement, le maintien, et le relâchement d'une communication) et entre lesquels sont partagés, sur un certain nombre de trames consécutives (26 pour le cas de la multitrame à 26 dans le cas du système GSM) ces canaux de transmission physiques.

Une limitation de l'accroissement de complexité du dispositif de test par rapport à sa structure actuelle prévue pour le test d'un seul terminal à la fois, peut par ailleurs être obtenue lorsque ce dispositif de test comporte des moyens permettant de faire varier dans le temps la fréquence porteuse des informations à transmettre, selon la technique connue dite de saut de fréquence (ou "frequency hopping" en anglo-saxon).

On rappelle que cette technique de saut de fréquence permet, dans un système de radiocommunications tel que notamment le système GSM, de mettre en oeuvre une forme de diversité de transmission permettant de faire face aux aléas de la transmission par le canal de transmission radioélectrique.

De tels moyens pour faire varier dans le temps la fréquence porteuse des informations à transmettre, bien que non utiles dans le principe pour le type de test envisagé ici (où il s'agit de contrôler la qualité de transmission des chaînes émission et réception de terminaux à tester) peuvent en effet être nécessaires pour d'autres types de test, où il s'agit plutôt de simuler le comportement du système de télécommunications considéré vis-à-vis des terminaux à tester. Lorsqu'un dispositif de test comporte effectivement de tels moyens pour faire varier, dans le temps, la fréquence porteuse des informations à transmettre, il suffit alors, pour allouer une trame donnée, ou un groupe de trames consécutives données, à un terminal à tester, de faire varier la fréquence porteuse des informations à transmettre, de trame en trame, ou de groupe de trame consécutives en groupe de trames consécutives, et d'associer une fréquence porteuse donnée à ce terminal à tester.

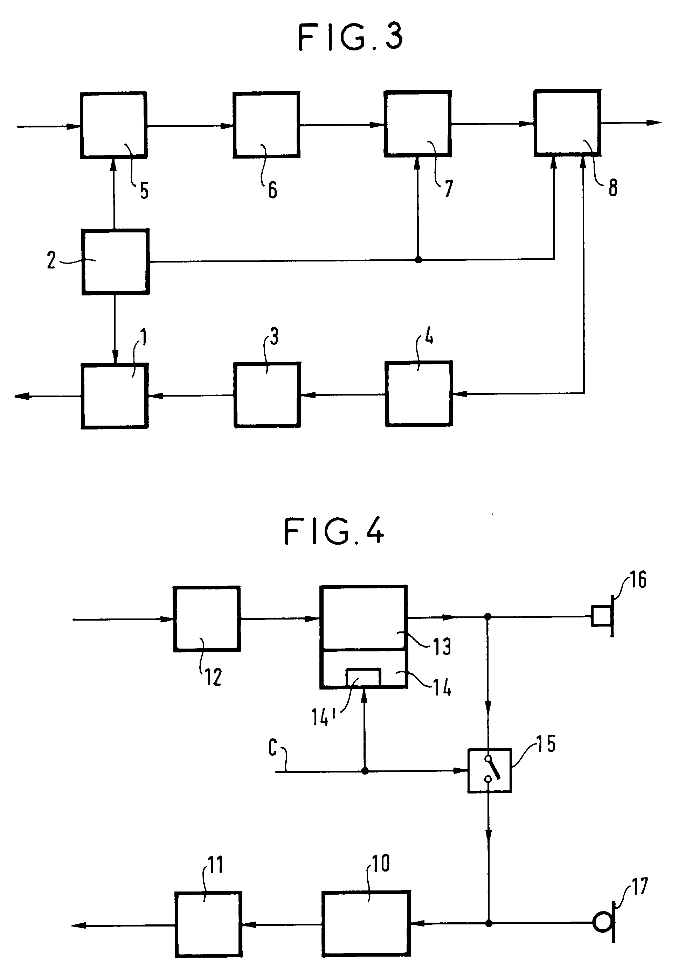

Un dispositif de test utilisant une telle possibilité est illustré schématiquement sur la figure 3.

Ce dispositif comporte :
- en émission :
   . un étage émission haute fréquence, 1, commandé par une table de saut de fréquence mémorisée dans une mémoire 2, cette mémoire étant, par exemple dans le cas illustré sur la figure 2, lue à un rythme égal à la fréquence-trame,
   . des moyens de codage et de modulation, 3, permettant de mettre les informations de test à appliquer à l'étage d'émission haute fréquence 1 dans un format de transmission admissible par le système de télécommunications considéré,
   . un générateur,4, d'informations de test relatives aux différents terminaux à tester, ce générateur étant en l'occurrence commandé, pour selectionner les informations de test relatives à un terminal donné, par la table de saut de fréquence mémorisée dans la mémoire 2,
- en réception :
   . un étage de réception haute fréquence, 5, également commandé par la table de saut de fréquence mémorisée dans la mémoire 2,
   . des moyens de démodulation et de décodage, 6, permettant de reconnaître les informations de test reçues,
- une mémoire, 7, permettant de mémoriser les informations de test issues des moyens 6 de démodulation et de décodage, et relatives aux différents terminaux à tester, cette mémoire étant également commandée, pour sélectionner les informations de test reçues relativement à un terminal donné, par la table de saut de fréquence mémorisée dans la mémoire 2,
- des moyens de mesure, 8, commandés comme la mémoire 7, recevant les informations de test reçues, issues de cette mémoire 7, et recevant également, pour comparaison à ces informations de test reçues, les informations de test émises, relativement au même terminal à tester, par le générateur d'informations de test 4.

On notera que, pour simplifier, n'ont pas été illustrés sur la figure 3, les éléments, existant par ailleurs dans les dispositifs de test connus, et permettant d'assurer, vis à vis du terminal à tester, les fonctions d'établissement et de relâchement de communication (avec le sens particulier attribué ici au mot communication, qui est la transmission d'informations de test).

Dans l'exemple, correspondant au cas illustré sur la figure 2, où le dispositif de test n'émet ainsi des informations de test vers un terminal à tester que toutes les "n" trames (où "n" désigne le nombre de terminaux à tester simultanément), et dans le cas où lesdits terminaux comportent des moyens dits de rupture pour rompre une communication lorsqu'un canal de transmission logique qui leur est alloué ne contient pas d'informations susceptibles d'être reconnues par ce terminal sur une période de répétition donnée de ce canal logique, il est nécessaire de prévoir, dans ces terminaux, des moyens pour inhiber ces moyens de rupture de communication, pour permettre leur test au moyen d'un dispositif de test suivant la présente invention.

Un terminal de télécommunications comportant de tels moyens est illustré sur la figure 4.

Ce terminal comporte :
- en émission :
   . des moyens de codage et de modulation, 10, permettant de mettre les informations à transmettre par ce terminal dans un format de transmission admissible par le système de télécommunications considéré,
   . un étage d'émission haute fréquence, 11, recevant les informations issues des moyens de codage et de modulation 10,
- en réception :
   . un étage de réception haute fréquence, 12,
   . des moyens de démodulation et de décodage, 13, permettant de reconnaître les informations reçues, et associés à des moyens, 14, pour détecter si un canal de transmission logique prédéterminé alloué à ce terminal ne contient pas d'informations susceptibles d'être reconnues par ces moyens 13 sur une période de répétition donnée de ce canal logique, et pour activer, dans ce cas, des moyens dits de rupture de communication pour rompre la communication considérée; par exemple, dans le cas du système GSM, ledit
   canal de transmission logique est le canal de signalisation à bas débit dit SACCH ("Slow Associated Control Channel") transmis dans la treizième trame d'une multitrame à 26. On notera que ces moyens 14 incluent à leur tour des moyens, repérés 14', permettant d'inhiber la commande des moyens de rupture de communication lorsque ce terminal est en cours de test, c'est à dire lorsqu'un signal de commande, noté C, est actif.
- des moyens, 15, symbolisés par un interrupteur, pour réaliser un rebouclage de la chaîne réception sur la chaîne émission de ce terminal dans la cas où ce terminal est à tester (c'est à dire lorsque le signal de commande C est actif) ou, dans le cas contraire, pour appliquer d'une part les informations issues de cette chaîne réception à un organe de terminaison de chaîne réception constitué par exemple par un écouteur 16, et pour appliquer d'autre part à l'entrée de la chaîne émission les informations issues d'un organe de terminaison de chaîne émission constitué par exemple par un microphone 17.

On notera que, pour simplifier, n'ont pas été illustrés sur la figure 4, les éléments, existant par ailleurs dans tout terminal de télécommunications, permettant d'assurer les fonctions classiques d'établissement et de relâchement de communication intéressant ce terminal.

## Revendications

1. Dispositif de test de terminaux de télécommunications, pour système de télécommunications, notamment de radiocommunications mobiles, du type à accès multiple, selon une structure de multiplex déterminée, caractérisé en ce qu'il comporte des moyens pour assurer une transmission d'informations dites de test entre ce dispositif de test (T) et une pluralité de terminaux à tester (TO, T1 ... Tn), par multiplexage, suivant ladite structure de multiplex.

2. Dispositif, selon la revendication 1, caractérisé en ce que ladite structure de multiplex étant une structure de multiplex temporel comportant des trames successives (TRO, TR1, TR2 ...) comportant chacune différents intervalles de temps (ITO, IT1, IT2 ...) destinés à être alloués respectivement à différents terminaux communiquant par ce système, lesdits moyens pour assurer une transmission d'informations de test entre ce dispositif et une pluralité de terminaux à tester comportent des moyens pour allouer respectivement différentes trames, ou différents groupes de trames consécutives, de ladite structure de multiplex temporel, à différents terminaux à tester, les intervalles de temps alloués dans ces différentes trames, ou dans ces différents groupes de trames consécutives, à ces différents terminaux à tester, pouvant être indifféremment identiques ou différents.

3. Dispositif selon la revendication 2, caractérisé en ce que lesdits groupes de trames consécutives sont des multitrames.

4. Dispositif selon l'une des revendications 2 et 3, caractérisé en ce que lesdits moyens pour allouer respectivement différentes trames, ou différents groupes de trames consécutives, de ladite structure de multiplex temporel, à différents terminaux à tester, comportent des moyens pour faire varier de trame en trame, ou de groupe de trames consécutives en groupe de trames consécutives, la fréquence porteuse des informations à transmettre, et des moyens pour associer une fréquence porteuse donnée à un terminal à tester donné.

5. Terminal de télécommunications, pour système de télécommunications, notamment de radiocommunications mobiles, du type à accès multiple par répartition temporelle, selon une structure de multiplex temporel déterminée, terminal comportant des moyens dits de rupture de communication, pour rompre une communication intéressant ce terminal lorsqu'un canal de transmission logique prédéterminé qui lui a été alloué dans ladite structure de multiplex temporel ne contient pas d'informations susceptibles d'être reconnues par ce terminal sur une période de répétition déterminée de ce canal de transmission logique, caractérisé en ce que, pour permettre d'être testé au moyen d'un dispositif de test suivant l'une des revendications 2 à 4, il comporte des moyens pour inhiber lesdits moyens de rupture de communication.
